# EUROPÄISCHE PATENTSCHRIFT

(11) **EP 4 319 906 B1**
(45) Veröffentlichungstag und Bekanntmachung des Hinweises auf die Patenterteilung: **18.02.2026**
(21) Anmeldenummer: 22721016.8
(22) Anmeldetag: 06.04.2022
(51) Int. Cl.: B01D 63/02, B01D 61/24, B01D 61/28, B29C 65/02

(54) **DIALYSATOR**
DIALYZER
DIALYSEUR

(30) Priorität: 09.04.2021 DE 102021108842
(43) Veröffentlichungstag der Anmeldung: 14.02.2024
(73) Patentinhaber: Fresenius Medical Care Deutschland GmbH, 61352 Bad Homburg (DE)
(72) Erfinder: GASTAUER, Paul, 61352 Bad Homburg (DE); KUGELMANN, Franz, 61352 Bad Homburg (DE); PAUL, Michael, 61352 Bad Homburg (DE); RUFFING, Andreas, 61352 Bad Homburg (DE); VEIT, Tobias, 61352 Bad Homburg (DE)
(74) Vertreter: Weiß, Stefan
(86) Internationale Anmeldenummer: PCT/EP2022/059075
(87) Internationale Veröffentlichungsnummer: WO 2022/214525

(56) Entgegenhaltungen:
- EP-A1- 2 883 597
- EP-A1- 3 290 100
- EP-B1- 0 942 251
- DE-A1- 10 147 907
- US-A- 4 724 900
- US-A1- 2019 105 608

## Beschreibung

### Technisches Gebiet

Die Erfindung betrifft eine Filtervorrichtung für den Stoffaustausch, insbesondere für die Hämodialyse, umfassend ein rohrabschnittsförmiges Gehäuse mit einem Schwerpunkt und mit zwei Gehäuseenden, in dem ein Hohlfaserbündel aus semipermeablen Membranen angeordnet ist, dessen Faserhohlräume einen ersten Strömungsraum bilden und der den das Hohlfaserbündel umgebende Gehäuseinnenraum einen zweiten Strömungsraum bildet, wobei die Strömungsräume an den Gehäuseenden durch mindestens eine Strömungsraumabdichtung voneinander getrennt sind, wobei das Gehäuse an mindestens einem Ende mit mindestens einem Durchbruch versehen ist und der mindestens eine Durchbruch näher zum Schwerpunkt des Gehäuses hin angeordnet ist als die Strömungsraumabdichtung, umfassend weiterhin mindestens eine Endkappe aufweisend eine erste und eine zweite Öffnung. Die Erfindung betrifft weiterhin ein Verfahren zur Herstellung einer solchen Filtervorrichtung.

### Hintergrund der Erfindung

Filtervorrichtungen für den Stoffaustausch, insbesondere für die Hämodialyse, sind im Stand der Technik bekannt. Dabei hat sich in der Filtrationstechnik und ganz besonders in der Hämodialyse als vorteilhaft erwiesen, semipermeable Hohlfasermembranen als Trennmedium zu verwenden, da diese einfach herstellbar sind und eine hervorragende Trenncharakteristik aufweisen. In der Hämodialyse hat sich die Verwendung von polysulfonbasierten Materialien in Verbindung mit einem Zusatz von Polyvinylpyrrollidon für die Hohlfasermembranen als marktbeherrschend erwiesen. Eine derartige Membran ist in der EP0168783A1 beschrieben. Diese Membranen werden zu Hohlfaserbündeln gefasst und in ein Filtergehäuse gefügt. Danach muss eine Abdichtung zweier Strömungsräume vorgenommen werden. Im Fall der Hämodialyse findet die Abdichtung zwischen der Blutseite und der Dialysatseite des Hämodialysators statt. Dementsprechend müssen Fluidzugänge und -abgänge geschaffen werden, um die jeweiligen Rohfluide dem Filter bereitstellen und die prozessierten Fluide wieder abführen zu können. Im Fall der Hämodialyse werden beide Fluide, getrennt durch die semipermeable Membran bzw. das Hohlfasermembranbündel, im Gegenstrom aneinander vorbeigeführt, so dass insgesamt 4 Fluidzugänge pro Dialysator nötig sind. Im Fall einer Dead-End Filtration kann es ausreichend sein, zwei Fluidzugänge vorzusehen.

Ein solches Filtergehäuse für die Dialyse ist in der EP2326410A1 beschrieben. Dabei ist vorgesehen, die jeweiligen Dialysatzu- und Abgänge am rohrabschnittsförmigen Gehäuse vorzusehen und die jeweiligen Blutzugänge in separaten Bauteilen, den Endkappen einzurichten. Die Endkappen werden dann gegen das Filtergehäuse abgedichtet, wobei eine separate elastomere Dichtung vorgesehen ist. Alle Bauteile werden im Spritzgussverfahren aus Thermoplasten hergestellt.

Eine vereinfachte Bauform ist in der DE10147907 oder US4724900 beschrieben, wobei in einer solchen Anordnung jeweils ein Fluidzu- und Abgang pro Endkappe vorgesehen ist. Eine solche Anordnung weist eine wesentliche produktionstechnische Vereinfachung auf, da die jeweiligen Produktionswerkzeuge für die rohrabschnittsförmigen Gehäuse vereinfacht sind. Es kann bei diesen sehr großen Gehäusewerkzeugen somit auf aufwändige Zusätze wie beispielsweise Schieber zumindest teilweise verzichtet werden. Diese Zusätze können einfacher in einem kleineren Endkappenwerkzeug untergebracht werden. Somit kann zusätzlich die Verwendung übermäßig großer Spritzgussmaschinen vermieden werden. Auch in der DE10147907 werden die jeweiligen Fluidräume zumindest teilweise über abdichtende elastomere Bauteile miteinander verbunden.

Bei der Verwendung abdichtender elastomerer Bauteile kommt es jedoch nachteiligerweise zur Ausbildung von Totvolumina, was die Effizienz eines Stoffaustausches behindert. Insbesondere im Blutkompartiment sind Totvolumina nachteilig, da Blut, welches gar nicht oder mit zu geringer Strömungsgeschwindigkeit extrakorporal fließt, zur Koagulation von Thrombozyten neigt und somit eine Verstopfung eines Dialysators hervorrufen kann.

Weiter ist es nachteilig, zusätzliche Bauteile verwenden zu müssen. Elastomere Bauteile sind zudem häufig nachteilig, da die Materialien eine geringe Blutkompatibilität aufweisen können. Werden diese elastomeren Bauteile beispielsweise aus EPDM gefertigt, kann ein Austritt von Weichmachern ins Blut stattfinden. Das Gleiche gilt im Allgemeinen für die Filtrationstechnik, da auch bei diesen Anwendungen der Übertritt von Substanzen ins Filtrat nachteilig ist.

Neben der Verwendung von elastomeren Bauteilen als Dichtmittel kann auch die Verwendung von Klebstoffen vorgesehen sein. Eine solche Verwendung von Klebstoffen ist produktionstechnisch sehr aufwändig und je nach Reaktionskinetik des Klebstoffes auch sehr zeitaufwändig. Zudem können nachteilige Bestandteile des Klebstoffes auf das Filtrat bzw. das Blut übergehen.

### Aufgabe der Erfindung

Es ist daher Aufgabe der Erfindung, eine Filtervorrichtung für den Stoffaustausch, insbesondere für die Hämodialyse, bereitzustellen, die die Nachteile des Standes der Technik verhindert oder zumindest abmildert. Insbesondere ist es Aufgabe der Erfindung, eine besonders einfach herstellbare Filtervorrichtung für den Stoffaustausch, insbesondere für die Dialyse, bereitzustellen, die gleichzeitig die nachteiligen Wirkungen auf ein Filtrat vermindert. Im Fall eines Dialysators soll eine nachteilige Wirkung auf das zu reinigende Blut vermindert werden.

### Zusammenfassung der Erfindung

Erfindungsgemäß wird die Aufgabe nach einem ersten Aspekt der Erfindung gelöst durch eine Filtervorrichtung für den Stoffaustausch, insbesondere für die Hämodialyse, umfassend ein rohrabschnittsförmiges Gehäuse mit einem Schwerpunkt und mit zwei Gehäuseenden, in dem ein Hohlfaserbündel aus semipermeablen Membranen angeordnet ist, dessen Faserhohlräume einen ersten Strömungsraum bilden und der den das Hohlfaserbündel umgebende Gehäuseinnenraum einen zweiten Strömungsraum bildet, wobei die Strömungsräume an den Gehäuseenden durch mindestens eine Strömungsraumabdichtung voneinander getrennt sind, wobei das Gehäuse an mindestens einem Ende mit mindestens einem Durchbruch versehen ist und der mindestens eine Durchbruch näher zum Schwerpunkt des Gehäuses hin angeordnet ist als die Strömungsraumabdichtung, umfassend weiterhin mindestens eine Endkappe aufweisend eine erste und eine zweite Öffnung, wobei das Gehäuse und die mindestens eine Endkappe eine erste Dichtfläche, die Gehäuse und Endkappe dichtend verbindet, ausbilden und wobei die erste Dichtfläche weiter vom Schwerpunkt des Gehäuses entfernt ist als der mindestens eine Durchbruch, und wobei zwischen der ersten Dichtfläche und der ersten Öffnung der Endkappe ein erster Fluidraum gebildet wird, über den die erste Öffnung mit dem ersten Strömungsraum fluidisch verbunden wird, wobei das Gehäuse und die mindestens eine Endkappe eine zweite Dichtfläche, die Gehäuse und Endkappe dichtend verbindet, ausbilden und die zweite Dichtfläche näher zum Schwerpunkt des Gehäuses hin angeordnet ist als die Strömungsraumabdichtung und der mindestens eine Durchbruch, und wobei zwischen der ersten und zweiten Dichtfläche und der zweiten Öffnung der Endkappe ein zweiter Fluidraum gebildet wird, über den die zweite Öffnung der Endkappe durch den mindestens einen Durchbruch hindurch mit dem zweiten Strömungsraum fluidisch verbunden wird, wobei die erste und zweite Dichtfläche nicht durch ein Dichtmittel ausgebildet sind.

Es wird somit eine besonders einfach herstellbare Filtervorrichtung vorgeschlagen, die ohne die Verwendung von Dichtmitteln wie elastomeren Bauteilen oder Klebstoffen auskommt. Damit werden Totvolumina verhindert oder verringert. Wird die Filtervorrichtung in der Hämodialyse betrieben, so werden nachteilige Wirkungen auf das Blut verringert. Insbesondere eine Neigung zum Verstopfen durch Aggregation von Thrombozyten wird verringert.

Gemäß der Erfindung wird eine Filtervorrichtung vorgeschlagen, die dadurch gekennzeichnet ist, dass in der ersten und zweiten Dichtfläche jeweils Moleküle des Gehäuses mit Molekülen der Endkappe verknäult sind. Durch die Verknäulung der Moleküle wird eine besonders sichere und langzeitstabile Verbindung der Endkappe mit dem Gehäuse gewährleistet. Eine Verknäulung der Moleküle des Gehäuses mit den Molekülen der Endkappe in der ersten und zweiten Dichtfläche wird dadurch erreicht, dass während der Verbindung des Gehäuses mit der Endkappe ein Aufschmelzen der jeweiligen Oberflächen gewährleistet wird. Die aufgeschmolzenen Oberflächen werden dann in Kontakt zueinander gebracht, wodurch die Verknäulung der Moleküle gewährleistet wird.

Es hat sich als besonders vorteilhaft erwiesen, wenn die Schmelzpunkte bzw. Glasübergangspunkte der Materialien des Gehäuses und der Endkappe sich um weniger als 10°C, bevorzugt weniger als 5°C, besonders bevorzugt weniger als 3°C unterscheiden. Dann sind besonders sichere Verbindungen möglich, die gleichzeitig nachteilige Wirkungen auf Filtrat bzw. Blut minimieren.

Es kann in einer Ausführungsform vorgesehen sein, dass die erste Dichtfläche weiter vom Schwerpunkt des Gehäuses entfernt ist als der mindestens eine Durchbruch und die Strömungsraumabdichtung. Eine solche Anordnung ist noch kompakter und im besonderen Maße mit verringerten Totvolumina ausgestattet.

Weiterhin kann in einer besonderen Ausführungsform vorgesehen sein, dass das rohrabschnittsförmige Gehäuse und die Endkappe aus derselben Materialgruppe gebildet sind. Sind beide Bauteile aus einer Materialgruppe gefertigt, wird der Prozess der Abdichtung wesentlich erleichtert. Insbesondere die Verknäulung der Moleküle von Endkappe und Gehäuse ist erleichtert, wenn eine Materialgruppe für beide Bauteile verwendet wird. Unter Materialgruppe sind beispielsweise gleiche Materialien, jedoch in unterschiedlicher Einfärbung gemeint. Auch unterschiedliche Copolymerzusammensetzungen können in einer Materialgruppe zusammengefasst sein.

Gemäß der Erfindung ist vorgesehen, dass das Material des Gehäuses und der Endkappe Polypropylen oder Copolymere des Polypropylens oder Polycarbonat, insbesondere Polypropylen oder Copolymere des Polypropylens, umfasst. Beide Materialien weisen eine ausreichend hohe Transparenz auf und sind als thermoplastische Werkstoffe geeignet, eine Verknäulung der Moleküle des Gehäuses mit den Molekülen der Endkappe zu gewährleisten. Insbesondere Polypropylen eignet sich besonders gut, da es ein besonders leichter Werkstoff ist und gleichzeitig mit besonders niedrigen Wandstärken von weniger als 2 mm im Fall des Gehäuses herstellbar ist. Dementsprechend ist eine Ausführungsform der Erfindung dadurch gekennzeichnet, dass die Wandstärke des Gehäuses weniger als 2 mm beträgt. In einer weiteren Ausführungsform ist auch die Wandstärke der Endkappe weniger als 2 mm, insbesondere weniger als 1,5 mm. Somit kann in einer besonderen Ausführungsform vorgesehen sein, dass die Wandstärke der Endkappe niedriger ist als die Wandstärke des Gehäuses, wobei in diesem Fall für beide Bauteile bevorzugt ein polypropylenbasiertes Material Verwendung findet.

Nach einer weiteren besonderen Ausführungsform ist vorgesehen, dass die erste Dichtfläche gleich oder größer, insbesondere größer, ist als die Querschnittsfläche des rohrabschnittsförmigen Gehäuses am Gehäuseende. Ist die Dichtfläche gleich der Querschnittsfläche des rohrabschnittsförmigen Gehäuses am Gehäuseende, so ist eine besonders gute Dichtwirkung durch eine optimale Ausnutzung der möglichen Dichtfläche gewährleistet. In einer bevorzugten Ausführungsform kann auch vorgesehen sein, dass die Dichtfläche größer als die Querschnittsfläche des rohrabschnittsförmigen Gehäuses am Gehäuseende ist. Dies kann dadurch gewährleistet werden, dass der Aufschmelzvorgang derart ausgestaltet ist, dass eine größere Materialmenge aufgeschmolzen wird und beim nachfolgenden Fügevorgang eine Quetschung vorgenommen wird. Ein solches Bauteil weist eine wulstförmige Dichtfläche auf, was sich vorteilhaft auf die Dichtwirkung auswirkt. Die Wulst kann auch vorteilhafterweise dazu führen, dass ein allfälliges Totvolumen weiter verringert wird, was insbesondere im Fall der Hämodialyse besonders erwünscht ist.

Weiterhin ist in einer bevorzugten Ausführungsform der Filtervorrichtung vorgesehen, dass zwei Endkappen an den entgegengesetzten Enden des rohrabschnittsförmigen Gehäuses vorgesehen sind und das Gehäuse an beiden Enden mit Durchbrüchen und Strömungsraumabdichtungen versehen ist und die Durchbrüche jeweils näher zum Schwerpunkt Gehäuses hin angeordnet sind als die Strömungsraumabdichtungen. Die Verwendung von zwei Filterkappen an den beiden Enden ist besonders für die Hämodialyse vorteilhaft, da dadurch das Blut und das Dialysat im Gegenstrom geführt werden kann. Das führt zu einer besonders effizienten Blutreinigung.

Weiterhin kann vorgesehen sein, dass das Gehäuse an mindestens einem Ende eine Vielzahl von Durchbrüchen aufweist. Dies bewirkt im Fall der Hämodialyse, dass ein besonders gleichmäßiger Dialysatfluß ermöglicht wird. Somit wird die Trennleistung von Urämtoxinen weiter verbessert. Gleichzeitig wird der hydraulische Druck im Dialysat und somit die mechanische Belastung der Dichtflächen verringert. Damit kann auch ein höherer Dialysatfluß erreicht werden, was sich wiederum günstig auf die Trennleistung der Filtervorrichtung auswirkt. Es kann auch vorgesehen sein, dass das Gehäuse an beiden Enden jeweils eine Vielzahl von Durchbrüchen aufweist.

Eine besondere Ausführungsform ist dadurch gekennzeichnet, dass die Filtervorrichtung ein Dialysator ist und dass die ersten Öffnungen der Endkappen einen Blutzugang und einen Blutausgang ermöglichen und dass die zweiten Öffnungen der Endkappen einen Dialysatzugang und einen Dialysatausgang ermöglichen.

Nach einer Weiterbildung der Erfindung ist vorgesehen, dass das rohrabschnittsförmige Gehäuse keinen Dialysatzu- und Abgang aufweist. Ein solches Gehäuse ist besonders kostengünstig und mit Hilfe eines vereinfachten Werkzeuges möglich. Zudem ist es dadurch besonders vereinfacht möglich, ein Mehrkavitätenwerkzeug für das Gehäuse vorzusehen, was zu einer Kosten- und Energieeinsparung führt.

In einer bevorzugten Ausführungsform umfasst das Material der Strömungsraumabdichtung Epoxidharz oder Polyurethanharz als Dichtmaterial. Besonders bevorzugt ist Polyurethan, weil es eine besonders gute Abdichtung ermöglicht, wenn Hohlfasern verwendet werden, die einen Außendurchmesser von weniger als 300 µm aufweisen. Auch bei Packungsdichten der Hohlfaserbündel von über 60% ist das Material Polyurethan aufgrund seiner Fließeigenschaften vorteilhaft.

In einer weiteren Ausführungsform ist vorgesehen, dass an dem rohrförmigen Gehäuseabschnitt und/oder an der Endkappe jeweils mindestens ein Energierichtungsgeber angeordnet ist. Eine solche Anordnung ist dann bevorzugt, wenn die Endkappe und das Gehäuse durch Ultraschallfügen verbunden werden. Ein solcher Energierichtungsgeber erhöht die Dichtwirkung der Fügung erheblich und beschleunigt und vereinfacht den Fügeprozess.

Bevorzugt ist vorgesehen, dass das Material der semipermeablen Membran Polysulfon, Polyethersulfon, Polyvinylpyrrolidon, Polymethylmethacrylat, Polyamid, Polyester, Cellulose oder Polyacrylnitril umfasst. Besonders bevorzugt ist ein Material, dass überwiegend aus einer Mischung aus Polysulfon oder Polyethersulfon und Polyvinylpyrrolidon besteht. Damit ist gemeint, dass das Material zu mehr als 50 Gew.-% aus dieser Mischung besteht. Diese Mischung ist im besonderen Maße blutkompatibel und verbessert somit die Eigenschaften der Filtervorrichtung, insbesondere des Dialysators, weiter.

Nach einem zweiten Aspekt der Erfindung wird die Aufgabe durch ein Verfahren zur Herstellung einer Filtervorrichtung nach dem ersten Aspekt der Erfindung gelöst, welches dadurch gekennzeichnet ist, dass die erste und zweite Dichtfläche jeweils durch Aufschmelzen und Wiederabkühlen der der Dichtflächen zugewandten Bereiche des Gehäuses und der Endkappe dichtend verbindend hergestellt werden und dass eine Verknäulung von Molekülen des Gehäuses mit Molekülen der Endkappe vorgenommen wird.

In einer Weiterbildung des Verfahrens ist vorgesehen, dass die Dichtflächen jeweils durch Schweißen, insbesondere durch Heizflächenschweißen, Laserschweißen, Rotationsschweißen oder Ultraschallschweißen, insbesondere durch Heizflächenschweißen, hergestellt sind. Durch diese Verfahren werden ein sicheres Aufschmelzen und Fügen der Bauteile gewährleistet. Insbesondere ist sichergestellt, dass die gewünschte Fügefläche, insbesondere eine wulstförmige, besonders gut abdichtende Fügefläche, bereitgestellt werden kann.

Bevorzugt ist vorgesehen, folgende Verfahrensschritte zur Herstellung einer Filtervorrichtung durchzuführen, wenn ein Heizflächen- oder Spiegelschweißverfahren durchgeführt wird:
a) Bereitstellen der Endkappe
b) Bereitstellen des rohrförmigen Gehäuseabschnittes
c) Bereitstellen des Spiegelschweißwerkzeuges zwischen der Endkappe und dem Gehäuseabschnitt, wobei das Spiegelschweißwerkzeug zumindest an den vorgesehenen mindestens 4 Kontaktflächen eine Temperatur aufweist, die oberhalb des Schmelzpunktes bzw. Glasübergangspunktes des jeweiligen Fügematerials ist
d) In Kontakt bringen des Spiegelschweißwerkzeuges mit den zu verschweißenden Kontaktflächen der Endkappe und dem Gehäuseabschnitt
e) Aufschmelzen der Kontaktflächen
f) Entfernen des Spiegelschweißwerkzeuges
g) Verschweißen von Endkappe und Gehäuseabschnitt durch verpressen der aufgeschmolzenen Kontaktflächen
h) Abkühlen der aufgeschmolzenen Kontaktflächen unter den Schmelzpunkt oder Glasübergangspunkt des jeweiligen Materials.

Nach einem dritten Aspekt der Offenbarung ist vorgesehen ein, Spiegelschweißwerkzeug bereitzustellen, welches geeignet ist, ein Verfahren gemäß dem zweiten Aspekt der Erfindung bereitzustellen bzw. in einem Verfahren nach dem zweiten Aspekt der Erfindung Verwendung zu finden.

Ein solches Spiegelschweißwerkzeug weist somit 4 Kontaktflächen auf, an denen es während des Verfahrens nach dem zweiten Aspekt der Erfindung zur gleichzeitigen lokalen Berührung und Materialaufschmelzung der Endkappe und des rohrförmigen Gehäuseabschnittes kommt.

In einer bevorzugten Ausführungsform ist die Kontaktfläche zwischen dem aufzuschmelzenden Gehäuseabschnitt und dem Spiegelschweißwerkzeug so ausgebildet, dass die Kontaktflächen des Gehäuseabschnittes bzw. der Endkappe auf das Werkzeug an Flächen auftreffen, die in Längsrichtung des (gedachten) Gehäuseabschnittes in von 0 und 90° verschiedenen Winkeln gebildet sind. Bevorzugt sind Winkel zwischen 20 und 70°, bevorzugter zwischen 30 und 60°, noch bevorzugter zwischen 40 und 50°.

Nach einer weiteren Ausführungsform sind diese Kontaktflächen konkav ausgebildet.

### Kurzbeschreibung der Zeichnungen

Weitere Einzelheiten und Vorteile der vorliegenden Erfindung werden anhand eines in den Zeichnungen dargestellten Ausführungsbeispiels näher erläutert. Es zeigen:
Fig. 1 eine schematische Darstellung eines rohabschnittförmigen Gehäuses
Fig. 2 eine schematische Darstellung einer Endkappe
Fig. 3 eine schematische Darstellung einer Filtervorrichtung, umfassend ein rohrabschnittförmiges Gehäuse und eine Endkappe
Fig. 3a eine vergrößerte Darstellung der Fig. 3 im Bereich einer ersten Dichtfläche
Fig. 4 eine Schematische Darstellung einer Anordnung aus rohrförmigem Gehäuse, Endkappe und Spiegelschweißwerkzeug während einer Aufheizphase eines Spiegelschweißvorganges.
Fig. 5a schematische Darstellung eines Abschnittes eines Heizelement- oder Spiegelschweißwerkzeuges mit dem zugehörigen Gehäuseabschnitt, darstellend eine besondere Ausführungsform
Fig. 5b schematische Darstellung eines Abschnittes eines Heizelement- oder Spiegelschweißwerkzeuges mit dem zugehörigen Endkappenabschnitt, darstellend eine besondere Ausführungsform
Fig. 6a schematische Darstellung eines Abschnittes eines Heizelement- oder Spiegelschweißwerkzeuges, darstellend eine besondere Ausführungsform

### Detaillierte Beschreibung eines Ausführungsbeispiels

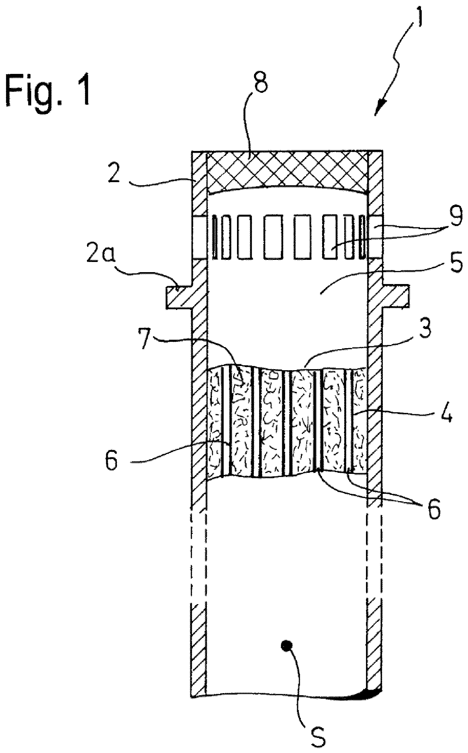

Fig. 1 zeigt ein rohrabschnittförmiges Gehäuse 2 einer Filtervorrichtung 1, welches ein Hohlfaserbündel 3 aus semipermeablen Membranen 4 aufweist. An den Enden weist das rohrabschnittförmige Gehäuse 2 eine Strömungsraumabdichtung 8 auf, die hier zum Schwerpunkt S hin konkav dargestellt ist. Die Strömungsraumabdichtung 8 ist aus Polyurethan gefertigt, eine Anordnung von Epoxidharz oder keramischem Dichtmaterial ist ebenso möglich. Wird die Filtervorrichtung 1 für die Dialyse verwendet, ist Polyurethan bevorzugt. Die äußere Oberfläche der Strömungsraumabdichtung 8 ist derart gestaltet, dass die Hohlfasermembranen 4 geöffnet sind, so dass ein erster Strömungsraum 6 gebildet wird, der das innere der Hohlfasermembranen 4 umfasst. Der zweite Strömungsraum 7 befindet sich im Gehäuse 2 außerhalb der Hohlfasermembranen 4. Die Fig. 1 zeigt weiterhin Durchbrüche 9 im Gehäuse 2, die näher zum Schwerpunkt S des Gehäuses 2 hin angeordnet sind als die Strömungsraumabdichtung 8. Ist die Filtervorrichtung 1 ein Dialysator, so kann über diese Durchbrüche 9 Dialysat der Außenfläche der Hohlfasermembran 4 zugeführt oder abgeführt werden, so dass ein Stoffaustausch zwischen der Blutseite des Dialysators, dargestellt durch den ersten Strömungsraum 6, und dem Dialysat, dargestellt durch den zweiten Strömungsraum 7, stattfinden kann. In einer anderen Ausführungsform kann auch vorgesehen sein, das Blut im zweiten Strömungsraum 7 und das Dialysat im ersten Strömungsraum 6 zu führen. Das Gehäuse 2 weist weiterhin einen Gehäusevorsprung 2a auf, der näher zum Schwerpunkt S des Gehäuses 2 hin angeordnet ist als die Strömungsraumabdichtung 8 und die Durchbrüche 9.

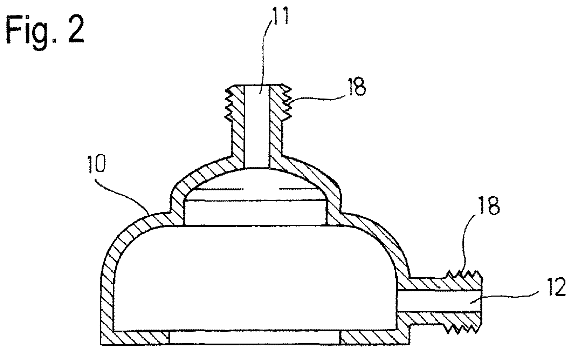

Die Fig. 2 zeigt eine Endkappe 10 mit einer ersten Öffnung 11 und einer zweiten Öffnung 12. An den Außenseiten dieser Öffnungen 11 und 12 sind Gewinde 18 bzw. Vorrichtungen zum Anschluss von hier nicht gezeigten Fluidleitungen vorgesehen.

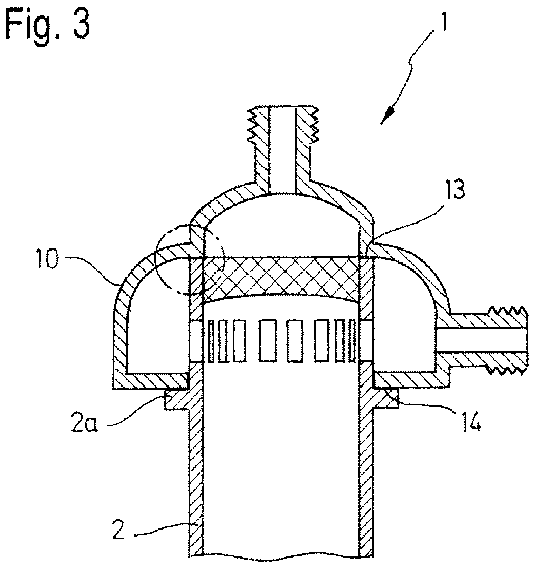

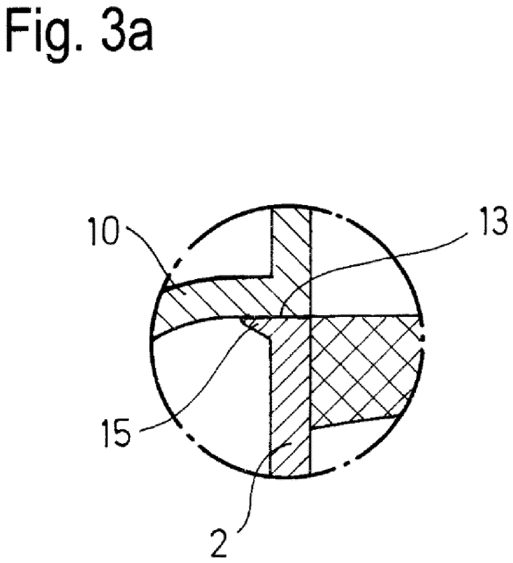

Die Fig. 3 zeigt den Zusammenbau der Endkappe 10 mit dem rohrabschnittsförmigen Gehäuse 2. Dabei sind beide Bauteile so ausgebildet, dass eine erste 13 und eine zweite 14 Dichtfläche vorhanden ist. Über die erste Öffnung 11 kann nun Fluid in den ersten Strömungsraum 6 eintreten oder aus der Öffnung 11 abgeführt werden, die erste Dichtfläche 13 verhindert dabei einen nicht gewünschten Übertritt des Fluids in den zweiten Strömungsraum 7. Über die zweite Öffnung 12 kann nun Fluid in den zweiten Strömungsraum 7 eintreten oder aus der zweiten Öffnung 12 abgeführt werden, die erste 13 und die zweite 14 Dichtfläche verhindern dabei einen nicht gewünschten Übertritt des zweiten Fluids in den ersten Strömungsraum 6. An dem rohrförmigen Gehäuse 2 ist der Vorsprung 2a gezeigt, der in diesem Ausführungsbeispiel zusammen mit der Endkappe 10 die zweite Dichtfläche 14 ausbildet.

In Fig. 3a ist eine Vergrößerung des Bereichs der ersten Dichtfläche 13 gezeigt, wobei eine erste Dichtfläche 13 ausgebildet ist, die größer ist als die Querschnittsfläche des rohrabschnittsförmigen Gehäuses 2 am Gehäuseende. Es ist eine Wulst 15 ausgeformt. Diese wurde in diesem Ausführungsbeispiel gebildet durch ein Spiegelschweißverfahren hergestellt, wobei die Fügepartner mit einem derartigen Druck gefügt wurden, dass eine Vergrößerung der ersten Dichtfläche 13 eingetreten ist.

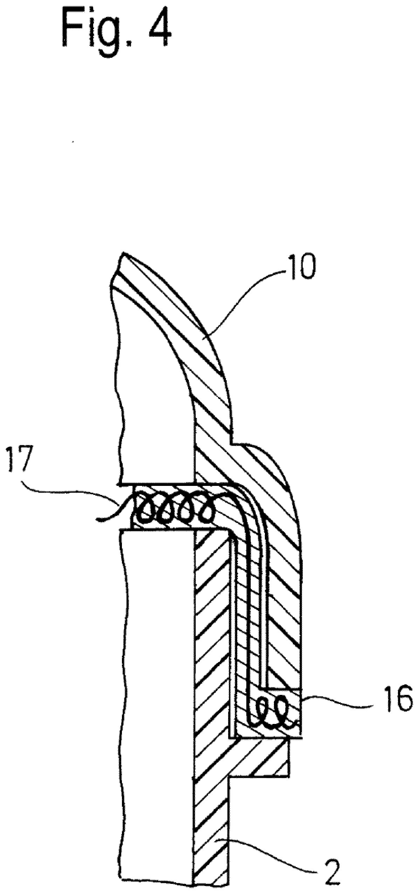

Fig. 4 zeigt schematisch den Fügevorgang bei der Ausbildung der Filtervorrichtung 1 durch Fügen der Endkappe 10 und dem rohrförmigen Gehäuseabschnitt 2, wobei beide Fügepartner aus Polypropylen ausgebildet sind. Es können auch andere Materialien vorgesehen sein, insbesondere auch Polycarbonat. Die Fig. 4 zeigt die Endkappe 10, den rohrförmigen Gehäuseabschnitt 2 und einen Querschnitt eines Spiegelschweißwerkzeuges 16. Das Werkzeug stellt dabei eine Kontaktfläche mit denjenigen Flächen der Endkappe 10 und des Gehäuses 2 bereit, die zur Fügung der Werkstücke in Kontakt gebracht werden müssen, um die erste 13 und zweite 14 Dichtfläche auszubilden. In der Darstellung ist auch eine Werkzeugbeheizung 17 dargestellt, die ein Aufheizen der Kontaktflächen der Fügepartner über den Schmelzpunkt bzw. den Glasübergangspunkt des Materials sicherstellt. Nach dem Aufheizvorgang können die Fügepartner räumlich weiter voneinander entfernt werden, so dass das Spiegelschweißwerkzeug 16 entfernt werden kann. Dann werden die Fügepartner so gefügt, dass die erste 13 und zweite 14 Dichtfläche ausgebildet werden. In diesem Ausführungsbeispiel werden Moleküle der Endkappe 10 mit Molekülen des rohrförmigen Gehäuseabschnittes 2 innig miteinander verknäult. Damit entstehen erste 13 und zweite 14 Dichtflächen, die eine besonders hohe Dichtheit aufweisen.

Alternativ können die ersten 13 und zweiten 14 Dichtflächen auch durch Rotationsschweißen oder durch Laserschweißen bereitgestellt werden. Das Rotationsschweißen ist dann möglich und bevorzugt, wenn die erste 13 und zweite 14 Dichtfläche rotationssymmetrisch angeordnet sind. Ultraschallschweißen ist ebenso möglich, wobei dann bevorzugt an dem rohrförmigen Gehäuseabschnitt 2 und/oder an der Endkappe 10 jeweils mindestens ein Energierichtungsgeber vorgesehen sein soll.

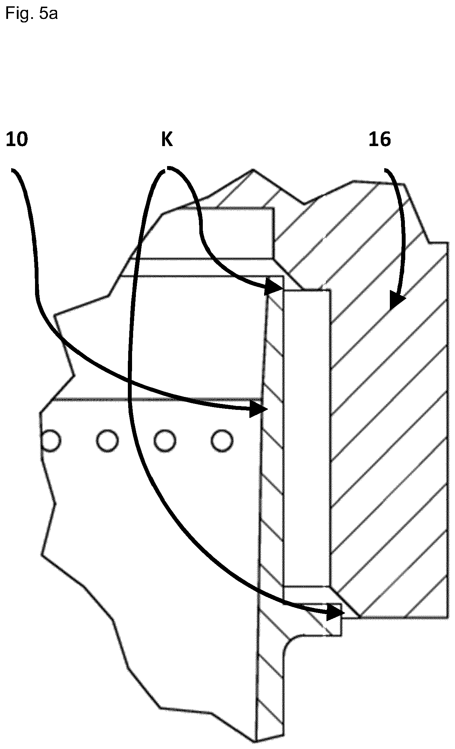

Die Fig. 5a stellt eine weitere bevorzugte Ausführungsform des Fügevorganges bei der Ausbildung der Filtervorrichtung 1 durch das Fügen der Endkappe 10 und dem rohrförmigen Gehäuseabschnitt 2 dar, wobei der rohrförmige Gehäuseabschnitt und das Spiegelschweißwerkzeug 16 in einer Abschnittsvergrößerung dargestellt sind. In dieser Ausführungsform ist die Kontaktfläche zwischen den aufzuschmelzenden Gehäuseabschnitt 2 und dem Spiegelschweißwerkzeug 16 so ausgebildet, dass die Kontaktfläche des Gehäuseabschnittes 2 auf das Werkzeug an einer Fläche auftrifft, die in Längsrichtung des Gehäuseabschnittes in einem von 0 und 90° verschiedenen Winkel gebildet ist. Bevorzugt ist ein Winkel zwischen 20 und 70°, bevorzugter zwischen 30 und 60°, noch bevorzugter zwischen 40 und 50°. In dem Ausführungsbeispiel ist ein Winkel von 45° angegeben. Eine derartige Ausführungsform hat den Vorteil, dass eine präzise Ansteuerung des Fügepunktes ermöglicht wird, so dass eine besonders sichere und ausschussarme Fügeverbindung entsteht. Zudem ist bei einer solchen Ausführung der Schweißwulst besonders klein, so dass mögliche Einengungen des Fließweges der Fluide im Trennprozess verringert werden. Im Fall eines Dialysators betrifft dies besonders die Dialysatseite.

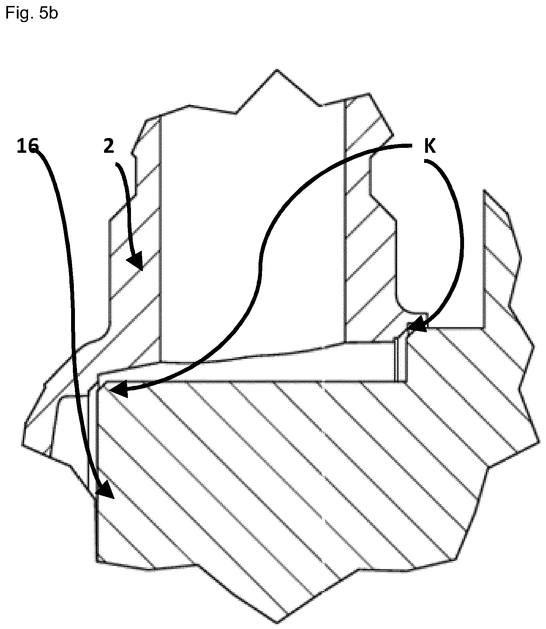

Die Fig. 5b stellt eine weitere bevorzugte Ausführungsform des Fügevorganges bei der Ausbildung der Filtervorrichtung 1 durch das Fügen der Endkappe 10 und dem rohrförmigen Gehäuseabschnitt 2 dar, wobei die Endkappe und das Spiegelschweißwerkzeug 16 in einer Abschnittsvergrößerung dargestellt sind. In dieser Ausführungsform ist die Kontaktfläche zwischen dem aufzuschmelzenden Teil der Endkappe 10 und dem Spiegelschweißwerkzeug 16 so ausgebildet, dass die Kontaktfläche der Endkappe 10 auf das Werkzeug 16 an einer Fläche auftrifft, der in Längsrichtung der (gedachten) der Filtervorrichtung in einem von 0 und 90° verschiedenen Winkel auftrifft. Bevorzugt ist ein Winkel zwischen 20 und 70°, bevorzugter zwischen 30 und 60°, noch bevorzugter zwischen 40 und 50°. In dem Ausführungsbeispiel ist ein Winkel von 45° angegeben. Eine derartige Ausführungsform hat den Vorteil, dass eine präzise Ansteuerung des Fügepunktes ermöglicht wird, so dass eine besonders sichere und ausschussarme Fügeverbindung entsteht. Zudem ist bei einer solchen Ausführung der Schweißwulst besonders klein, so dass mögliche Einengungen des Fließweges der Fluide im Trennprozess verringert werden. Im Fall eines Dialysators betrifft dies besonders auch die Blutseite. Dabei wird die Schweißwulst so ausgebildet, dass ein möglichst geringes Totvolumen im Blutraum entsteht bzw. das Totvolumen sogar gänzlich verhindert werden kann. Ein Totvolumen auf der Blutseite kann zu einer zu starken Koagulation des Blutes führen, so dass eine zunehmende Verstopfung des Dialysators die Folge ist.

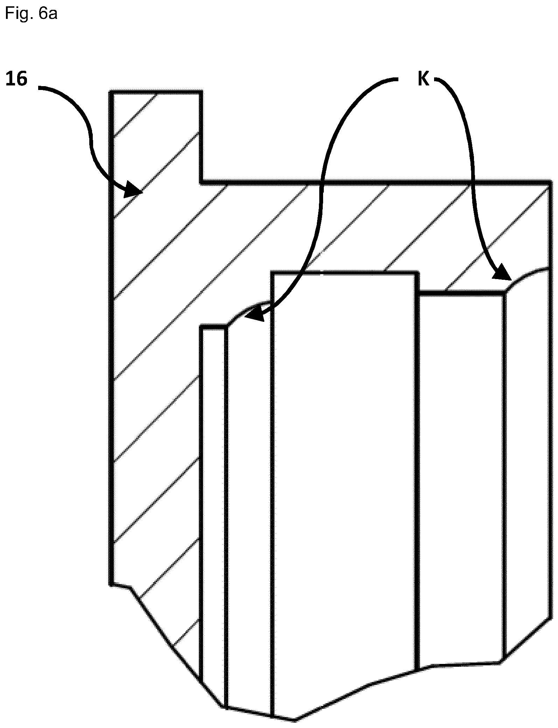

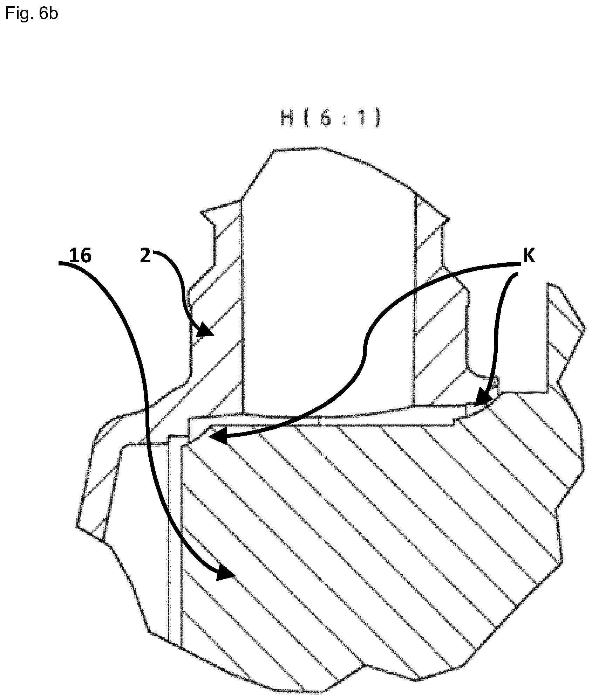

Eine weitere Ausführungsform ist in der Abb. 6a dargestellt, wobei diese eine weiter verbesserte Modifikation der Ausführungsform der Abb. 5a darstellt. In dieser Ausführungsform ist die Kontaktfläche zwischen den aufzuschmelzenden Gehäuseabschnitt 2 und dem Spiegelschweißwerkzeug 16 so ausgebildet, dass die Kontaktfläche des Gehäuseabschnittes 2 auf das Werkzeug an einer Fläche auftrifft, die in Längsrichtung des Gehäuseabschnittes in einem von 0 und 90° verschiedenen Winkel gebildet ist, wobei die Fläche konkav gekrümmt ausgebildet ist. Unter konkaver Krümmung ist zu verstehen, dass die Krümmung in das Schweißwerkzeug hineinragt. Der Krümmungsradius muss an die Gehäusedimensionen angepasst sein. Im Fall einer Filtervorrichtung von der Größe eines Dialysators sind bevorzugte Krümmungsradien zwischen 1 mm und 10 mm, insbesondere zwischen 2 und 8 mm, weiter insbesondere zwischen 3 und 6 mm. In der Ausführungsform ist ein Radius von 4,5 mm angegeben. Die konkave Krümmung erleichtert die präzise Aufnahme des Fügepartners auch bei erhöhten Toleranzen des Fügepartners, so dass eine weiter erhöhte Produktsicherheit und Schweißqualität die Folge ist. Erhöhte Toleranzen treten insbesondere auf, wenn als Gehäusematerial ein Polyolefin, insbesondere eine polypropylenbasiertes Material Verwendung findet. Die Abb. 6b gilt für die Fügung der Endkappe 2 entsprechend.

### Liste der Bezugszeichen:

1 Filtervorrichtung
2 Rohrabschnittsförmiges Gehäuse
2a Gehäusevorsprung
3 Hohlfaserbündel
4 Semipermeable Membran
5 Gehäuseinnenraum
6 Erster Strömungsraum
7 Zweiter Strömungsraum
8 Strömungsraumabdichtung
9 Durchbrüche
10 Endkappe
11 Erste Öffnung
12 Zweite Öffnung
13 Erste Dichtfläche
14 Zweite Dichtfläche
15 Wulst
16 Spiegelschweißwerkzeug
17 Werkzeugheizung
18 Gewinde
S Schwerpunkt
K Kontaktflächen

## Patentansprüche

1. Filtervorrichtung (1) für den Stoffaustausch, insbesondere für die Hämodialyse, umfassend ein
• rohrabschnittsförmiges Gehäuse (2) mit einem Schwerpunkt (S)und mit zwei Gehäuseenden, in dem ein Hohlfaserbündel (3) aus semipermeablen Membranen (4) angeordnet ist, dessen Faserhohlräume einen ersten Strömungsraum (6) bilden und der den das Hohlfaserbündel (3) umgebende Gehäuseinnenraum einen zweiten Strömungsraum (7) bildet,
• wobei die Strömungsräume an den Gehäuseenden durch mindestens eine Strömungsraumabdichtung (8) voneinander getrennt sind,
• wobei das Gehäuse (2) an mindestens einem Ende mit mindestens einem Durchbruch (9) versehen ist und der mindestens eine Durchbruch (9) näher zum Schwerpunkt (S) des Gehäuses hin angeordnet ist als die Strömungsraumabdichtung (8)
• umfassend weiterhin mindestens eine Endkappe (10) aufweisend eine erste (11) und eine zweite Öffnung (12), wobei das Gehäuse (2) und die mindestens eine Endkappe (10) eine erste Dichtfläche (13) , die Gehäuse (2) und Endkappe (10) dichtend verbindet, ausbilden und wobei die erste Dichtfläche (13) weiter vom Schwerpunkt (S) des Gehäuses (2) entfernt ist als der mindestens eine Durchbruch (9) , und
• wobei zwischen der ersten Dichtfläche (13) und der ersten Öffnung (11) der Endkappe (10) ein erster Fluidraum gebildet wird, über den die erste Öffnung (11) mit dem ersten Strömungsraum (6) fluidisch verbunden wird
• wobei das Gehäuse (2) und die mindestens eine Endkappe (10) eine zweite Dichtfläche (14), die Gehäuse (2) und Endkappe (10) dichtend verbindet, ausbilden und die zweite Dichtfläche (14) näher zum Schwerpunkt (S) des Gehäuses (2) hin angeordnet ist als die Strömungsraumabdichtung (8) und der mindestens eine Durchbruch (9),
• und wobei zwischen der ersten (13) und zweiten Dichtfläche (14) und der zweiten Öffnung (12) der Endkappe ein zweiter Fluidraum gebildet wird, über den die zweite Öffnung (12) der Endkappe (10) durch den mindestens einen Durchbruch (9) hindurch mit dem zweiten Strömungsraum fluidisch verbunden wird,
• wobei die erste (13) und zweite Dichtfläche (14) nicht durch ein Dichtmittel ausgebildet sind,
• **dadurch gekennzeichnet, dass** das Material des Gehäuses (2) und der Endkappe (10) Polypropylen oder Copolymere des Polypropylens oder Polycarbonat, insbesondere Polypropylen oder Copolymere des Polypropylens, umfasst, und in der ersten (13) und zweiten Dichtfläche (14) jeweils Moleküle des Gehäuses mit Molekülen der Endkappe verknäult sind.

2. Filtervorrichtung (1) nach Anspruch 1, **dadurch gekennzeichnet, dass** die erste (13) Dichtfläche weiter vom Schwerpunkt (S) des Gehäuses (2) entfernt ist als der mindestens eine Durchbruch (9) und die Strömungsraumabdichtung (8).

3. Filtervorrichtung (1) nach einem der vorherigen Ansprüche, **dadurch gekennzeichnet, dass** das rohrabschnittsförmige Gehäuse (2) und die Endkappe (10) aus derselben Materialgruppe gebildet sind.

4. Filtervorrichtung (1) nach einem der vorherigen Ansprüche, **dadurch gekennzeichnet, dass** zwei Endkappen (10) an den entgegengesetzten Enden des rohrabschnittsförmigen Gehäuses (2) vorgesehen sind und das Gehäuse (2) an beiden Enden mit Durchbrüchen (9) und Strömungsraumabdichtungen (8) versehen ist und die Durchbrüche (9) jeweils näher zum Schwerpunkt (S) des Gehäuses (2) hin angeordnet sind als die Strömungsraumabdichtungen (8).

5. Filtervorrichtung (1) nach einem der vorherigen Ansprüche, **dadurch gekennzeichnet, dass** das Gehäuse (2) an mindestens einem Ende jeweils eine Vielzahl von Durchbrüchen (9) aufweist.

6. Filtervorrichtung (1) nach Anspruch 4, **dadurch gekennzeichnet, dass** die Filtervorrichtung (1) ein Dialysator ist und dass die ersten Öffnungen (11) der Endkappen einen Blutzugang und einen Blutausgang ermöglichen und dass die zweiten Öffnungen (12) der Endkappen einen Dialysatzugang und einen Dialysatausgang ermöglichen.

7. Filtervorrichtung (1) nach Anspruch 6, **dadurch gekennzeichnet, dass** das rohrabschnittsförmige Gehäuse (2) keinen Dialysatzu- oder Abgang aufweist.

8. Filtervorrichtung (1) nach einem der vorherigen Ansprüche, **dadurch gekennzeichnet, dass** das Material der semipermeablen Membranen (4) Polysulfon, Polyvinylpyrrolion, Polymethylmethacrylat, Polyamid, Polyester, Cellulose oder Polyacrylnitril umfasst.

9. Verfahren zur Herstellung einer Filtervorrichtung (1) nach einem der vorherigen Ansprüche, **dadurch gekennzeichnet, dass** die erste (13) und zweite Dichtfläche (14) jeweils durch Aufschmelzen und Wiederabkühlen der der Dichtflächen (13, 14) zugewandten Bereiche des Gehäuses (2) und der Endkappe (10) dichtend verbindend hergestellt werden und dass eine Verknäulung von Molekülen des Gehäuses (2) mit Molekülen der Endkappe (10) vorgenommen wird, wobei die Dichtflächen (13, 14) jeweils durch Heizflächenschweißen hergestellt sind.

## Claims

1. Filter device (1) for material exchange, more particularly for haemodialysis, comprising a
• tubular housing (2) having a centre of gravity (S) and having two housing ends, in which housing there is arranged a hollow-fibre bundle (3) composed of semipermeable membranes (4), the fibre cavities of which hollow-fibre bundle form a first flow space (6), and the housing interior surrounding the hollow-fibre bundle (3) forms a second flow space (7),
• wherein the flow spaces are separated from one another at the housing ends by at least one flow-space seal (8),
• wherein the housing (2) is provided with at least one breach (9) at at least one end, and the at least one breach (9) is arranged closer to the centre of gravity (S) of the housing than is the flow-space seal (8),
• furthermore comprising at least one end cap (10) having a first opening (11) and a second opening (12), wherein the housing (2) and the at least one end cap (10) form a first sealing surface (13), which sealingly connects housing (2) and end cap (10), and wherein the first sealing surface (13) is at a further distance from the centre of gravity (S) of the housing (2) than is the at least one breach (9), and
• wherein a first fluid space is formed between the first sealing surface (13) and the first opening (11) of the end cap (10), via which first fluid space the first opening (11) is fluidically connected to the first flow space (6),
• wherein the housing (2) and the at least one end cap (10) form a second sealing surface (14), which sealingly connects housing (2) and end cap (10), and the second sealing surface (14) is arranged closer to the centre of gravity (S) of the housing (2) than are the flow-space seal (8) and the at least one breach (9),
• and wherein a second fluid space is formed between the first sealing surface (13) and second sealing surface (14) and the second opening (12) of the end cap, via which second fluid space the second opening (12) of the end cap (10) is fluidically connected to the second flow space through the at least one breach (9),
• wherein the first sealing surface (13) and second sealing surface (14) are not formed by a sealant,
• **characterized in that** the material of the housing (2) and of the end cap (10) comprises polypropylene or copolymers of polypropylene or polycarbonate, more particularly polypropylene or copolymers of polypropylene, and, in each of the first sealing surface (13) and second sealing surface (14), molecules of the housing are entangled with molecules of the end cap.

2. Filter device (1) according to Claim 1, **characterized in that** the first sealing surface (13) is at a further distance from the centre of gravity (S) of the housing (2) than are the at least one breach (9) and the flow-space seal (8).

3. Filter device (1) according to any one of the preceding claims, **characterized in that** the tubular housing (2) and the end cap (10) are formed from the same group of materials.

4. Filter device (1) according to any one of the preceding claims, **characterized in that** two end caps (10) are provided, at the opposite ends of the tubular housing (2), and the housing (2) is provided at both ends with breaches (9) and flow-space seals (8), and the breaches (9) are in each case arranged closer to the centre of gravity (S) of the housing (2) than are the flow-space seals (8).

5. Filter device (1) according to any one of the preceding claims, **characterized in that** the housing (2) has a multiplicity of breaches (9) at at least one end.

6. Filter device (1) according to Claim 4, **characterized in that** the filter device (1) is a dialyser, and **in that** the first openings (11) of the end caps allow an inflow of blood and an outflow of blood, and **in that** the second openings (12) of the end caps allow an inflow of dialysate and an outflow of dialysate.

7. Filter device (1) according to Claim 6, **characterized in that** the tubular housing (2) does not have a dialysate inlet or outlet.

8. Filter device (1) according to any one of the preceding claims, **characterized in that** the material of the semi-permeable membranes (4) comprises polysulfone, polyvinylpyrrolidone, polymethyl methacrylate, polyamide, polyester, cellulose or polyacrylonitrile.

9. Method for producing a filter device (1) according to any of the preceding claims, **characterized in that** the first sealing surface (13) and second sealing surface (14) are in each case produced by fusing and cooling of the regions of the housing (2) and of the end cap (10) that face the sealing surfaces (13, 14), with formation of a sealing connection, and **in that** an entanglement of molecules of the housing (2) with molecules of the end cap (10) is carried out, wherein the sealing surfaces (13, 14) are each produced by hot-surface welding.

## Revendications

1. Dispositif de filtration (1) pour l'échange de substances, en particulier pour l'hémodialyse, comprenant
• un boîtier (2) en forme de section tubulaire avec un centre de gravité (S) et avec deux extrémités de boîtier, dans lequel est disposé un faisceau de fibres creuses (3) composé de membranes semi-perméables (4), dont les cavités de fibres forment un premier espace d'écoulement (6) et dont l'espace intérieur de boîtier entourant le faisceau de fibres creuses (3) forme un deuxième espace d'écoulement (7),
• les espaces d'écoulement sur les extrémités de boîtier étant séparés l'un de l'autre par au moins une étanchéité (8) d'espace d'écoulement,
• le boîtier (2) étant pourvu sur au moins une extrémité d'au moins un ajour (9) et l'au moins un ajour (9) étant disposé davantage à proximité du centre de gravité (S) du boîtier que l'étanchéité (8) d'espace d'écoulement
• comprenant par ailleurs au moins un capuchon d'extrémité (10) comportant une première (11) et une deuxième ouverture (12), le boîtier (2) et l'au moins un capuchon d'extrémité (10) formant une première surface d'étanchéité (13), qui relie de manière étanche le boîtier (2) et le capuchon d'extrémité (10) et la première surface d'étanchéité (13) étant plus éloignée du centre de gravité (S) du boîtier (2) que l'au moins un ajour (9), et
• un premier espace fluidique, par lequel la première ouverture (11) est reliée fluidiquement au premier espace d'écoulement (6), étant formé entre la première surface d'étanchéité (13) et la première ouverture (11) du capuchon d'extrémité (10)
• le boîtier (2) et l'au moins un capuchon d'extrémité (10) formant une deuxième surface d'étanchéité (14), qui relie de manière étanche le boîtier (2) et le capuchon d'étanchéité (10), et la deuxième surface d'étanchéité (14) étant disposée davantage à proximité du centre de gravité (S) du boîtier (2) que l'étanchéité (8) d'espace d'écoulement et l'au moins un ajour (9),
• et un deuxième espace fluidique, par lequel la deuxième ouverture (12) du capuchon d'extrémité (10) est reliée fluidiquement au deuxième espace d'écoulement par l'au moins un ajour (9), étant formé entre la première (13) et la deuxième surface d'étanchéité (14) et la deuxième ouverture (12) du capuchon d'extrémité,
• la première (13) et la deuxième surface d'étanchéité (14) n'étant pas formées par un moyen d'étanchéité,
• **caractérisé en ce que** le matériau du boîtier (2) et du capuchon d'extrémité (10) comprend du polypropylène ou des copolymères du polypropylène ou du polycarbonate, en particulier du polypropylène ou des copolymères du polypropylène, et des molécules du boîtier sont entremêlées avec des molécules du capuchon d'extrémité dans la première (13) et la deuxième surface d'étanchéité (14).

2. Dispositif de filtration (1) selon la revendication 1, **caractérisé en ce que** la première (13) surface d'étanchéité est plus éloignée du centre de gravité (S) du boîtier (2) que l'au moins un ajour (9) et l'étanchéité (8) d'espace d'écoulement.

3. Dispositif de filtration (1) selon l'une des revendications précédentes, **caractérisé en ce que** le boîtier (2) en forme de section tubulaire et le capuchon d'extrémité (10) sont formés à partir du même groupe de matériaux.

4. Dispositif de filtration (1) selon l'une des revendications précédentes, **caractérisé en ce que** deux capuchons d'extrémité (10) sont prévus sur les extrémités opposées du boîtier (2) en forme de section tubulaire et le boîtier (2) est pourvu d'ajours (9) et d'étanchéités (8) d'espace d'écoulement sur les deux extrémités, et les ajours (9) sont disposés chacun davantage à proximité du centre de gravité (S) du boîtier (2) que les étanchéités (8) d'espace d'écoulement.

5. Dispositif de filtration (1) selon l'une des revendications précédentes, **caractérisé en ce que** le boîtier (2) comporte sur au moins une extrémité une pluralité d'ajours (9) respectivement.

6. Dispositif de filtration (1) selon la revendication 4, **caractérisé en ce que** le dispositif de filtration (1) est un dialyseur et que les premières ouvertures (11) des capuchons d'extrémité permettent un accès au sang et une sortie de sang, et que les deuxièmes ouvertures (12) des capuchons d'extrémité permettent un accès au dialysat et une sortie de dialysat.

7. Dispositif de filtration (1) selon la revendication 6, **caractérisé en ce que** le boîtier (2) en forme de section tubulaire ne comporte pas d'entrée ou de sortie de dialysat.

8. Dispositif de filtration (1) selon l'une des revendications précédentes, **caractérisé en ce que** le matériau des membranes semi-perméables (4) comprend du polysulfone, de la polyvinylpyrrolidone, du polyméthacrylate de méthyle, du polyamide, du polyester, de la cellulose ou du polyacrylonitrile.

9. Procédé de fabrication d'un dispositif de filtration (1) selon l'une des revendications précédentes, **caractérisé en ce que** la première (13) et la deuxième surface d'étanchéité (14) sont fabriquées de manière à assurer une liaison étanche chacune par fusion et refroidissement des zones du boîtier (2) et du capuchon d'extrémité (10) tournées vers les surfaces d'étanchéité (13, 14) et que des molécules du boîtier (2) sont entremêlées avec des molécules du capuchon d'extrémité (10), les surfaces d'étanchéité (13, 14) étant fabriquées chacune par soudage de surface chauffante.
